# EUROPÄISCHE PATENTSCHRIFT

(11) **EP 2 391 516 B1**
(45) Veröffentlichungstag und Bekanntmachung des Hinweises auf die Patenterteilung: **19.12.2012**
(21) Anmeldenummer: 10700813.8
(22) Anmeldetag: 18.01.2010
(51) Int. Cl.: B60G 3/26, B62D 17/00

(54) **VORRICHTUNG ZUM VERSTELLEN VON STURZ UND/ODER SPUR DER RÄDER VON RADAUFHÄNGUNGEN**
DEVICE FOR ADJUSTING THE CAMBER AND/OR TRACK OF WHEELS OF WHEEL SUSPENSIONS
DISPOSITIF POUR RÉGLER LE CARROSSAGE ET/OU LE PINCEMENT DES ROUES DE SUSPENSIONS DE ROUE

(30) Priorität: 30.01.2009 DE 102009006903
(43) Veröffentlichungstag der Anmeldung: 07.12.2011
(73) Patentinhaber: Audi AG, 85045 Ingolstadt (DE)
(72) Erfinder: MICHEL, Wilfried, 93339 Riedenburg (DE); MEITINGER, Karl-Heinz, 81667 München (DE); KOSSIRA, Christoph, 85053 Ingolstadt (DE); MÜLLER, Hugo, 86701 Rohrenfels-Ballersdorf (DE); SCHMID, Wolfgang, 85354 Freising (DE)
(74) Vertreter: Asch, Konrad
(86) Internationale Anmeldenummer: PCT/EP2010/000250
(87) Internationale Veröffentlichungsnummer: WO 2010/086097

(56) Entgegenhaltungen:
- WO-A1-89/08566
- WO-A1-98/16418
- WO-A1-2005/047030

## Beschreibung

Die Erfindung betrifft eine Vorrichtung zum Verstellen von Sturz und/oder Spur der Räder von Radaufhängungen, insbesondere für Kraftfahrzeuge, gemäß dem Oberbegriff des Patentanspruches 1.

In einer gattungsgemäßen Vorrichtung (WO-A-98/16418) ist der Sturz und/oder die Spur der Räder im Fahrbetrieb über in den Radträger integrierte Stellzylinder bzw. Drehteile verstellbar. Der Radträger ist dabei in ein das Rad aufnehmendes Trägerteil und ein an Radaufhängungselementen angelenktes Führungsteil unterteilt, die durch Verdrehung eines oder beider Stellzylinder über elektrische Stellmotoren das Trägerteil relativ zum Führungsteil verschwenken. Die Verstellung wird dabei dadurch bewirkt, dass die rotationssymmetrischen Stellzylinder eine gemeinsame Drehachse und dazu geneigte Schrägflächen aufweisen, die bei Verdrehung der Stellzylinder gleichsinnig oder gegensinnig ein entsprechendes Verschwenken des Trägerteiles um bis zu 5° Spur- und/oder Sturzwinkel ermöglichen.

Aufgabe der Erfindung ist es, die Vorrichtung der gattungsgemäßen Art derart weiterzubilden, dass sie funktionell besonders robust und baulich sehr kompakt ausgebildet ist.

Diese Aufgabe wird erfindungsgemäß mit den Merkmalen des Patentanspruches 1 gelöst. Vorteilhafte Weiterbildungen der Erfindung sind in den Unteransprüchen angeführt.

Erfindungsgemäß wird vorgeschlagen, dass das Trägerteil einen das Radlager aufnehmenden Flanschabschnitt und einen zum Führungsteil sich erstreckenden Nabenabschnitt aufweist, um den herum die beiden Stellzylinder bzw. Drehteile mit deren Gleitlagerungen angeordnet sind und dass zwischen dem Nabenabschnitt und dem Führungsteil und/oder radial außerhalb zwischen dem Flanschabschnitt und dem Führungsteil eine Abdichtung vorgesehen ist. Damit gelingt es, eine zwischen dem Trägerteil und dem Führungsteil baulich besonders kompakt bauende Konstruktion zu schaffen, die durch die "gekapselte" Anordnung auch rauhen Einsatzbedingungen gerecht wird. Dabei ist eine günstige Kraft- und Momentenabstützung zwischen dem Seitenkräften und Bremsmomenten ausgesetzten Trägerteil und dem Führungsteil gegeben.

Die radial äußere Abdichtung kann bevorzugt durch einen mit dem Flanschabschnitt des Trägerteiles und einem ringförmigen Vorsprung am Führungsteil fest verbundenem Faltenbalg gebildet sein, der mit baulich einfachen Mitteln die innerhalb des Faltenbalges positionierten Stellzylinder mit ihren Lagerungen abdeckt.

In besonders vorteilhafter Weise kann der Faltenbalg als Metallbalg ausgebildet sein und zugleich als Verdrehsicherung für das Trägerteil dienen. Der Metallbalg kann somit in fertigungstechnisch günstiger Weise zwei Funktionen in einem erfüllen.

In alternativer Ausgestaltung kann jedoch innerhalb eines gummielastischen Faltenbalges ein in Umfangsrichtung formschlüssig mit dem Trägerteil und dem Führungsteil gekoppelter Kardanring angeordnet sein. Der Kardanring kann in Umfangsrichtung formschlüssig zum Beispiel mit an dem Trägerteil und dem Führungsteil angeformten, axial zueinander gerichteten Mitnehmern versehen sein, die in entsprechende, umfangsversetzte Ausnehmungen des Kardanringes einragen.

Des Weiteren kann an dem Führungsteil ein Lagerring ausgebildet sein, auf dem der eine Stellzylinder drehbar gelagert ist, wobei die radial innere Abdichtung zwischen dem Lagerring und dem Nabenabschnitt des Trägerteiles angeordnet ist und somit in baulich einfacher Weise die radial innere Abdichtung der gesamten Verstellmimik mit Stellzylindern, Wälzlagern, etc. erreicht ist.

Besonders vorteilhaft kann die Abdichtung gebildet sein mittels eines einen Kugelabschnitt aufweisenden Dichtringes, der auf dem Nabenabschnitt angeordnet ist und der mit einer kalottenförmigen Ausnehmung im Lagerring dichtend zusammenwirkt. Daraus resultiert eine zuverlässige Abdichtung auch größerer Verstellausschläge des Nabenabschnittes relativ zum Lagerring.

Insbesondere kann dabei der Dichtring auf dem Nabenabschnitt axial verschiebbar geführt sein und mittels einer Feder gegen die kalottenförmige Ausnehmung im Lagerring vorgespannt sein. Ferner kann der Mittelpunkt des Kugelabschnittes des Dichtringes mit dem Schwenkpol des Trägerteiles bei einer Verstellung des Sturzes und/oder des Spurwinkels über die Stellzylinder zumindest in Wesentlichen zusammenfallen. Beide Maßnahmen ermöglichen bei einer fertigungstechnisch einfachen Konstruktion eine zuverlässige Abdichtung auch bei größeren Verstellwinkeln des Trägerteiles. Die Gleitflächen des Dichtringes und/oder der Ausnehmung im Lagerring sollten feinbearbeitet und/oder beschichtet sein (zum Beispiel mit PTFE).

Des weiteren können in einer bevorzugten Anordnung die Stellzylinder über elektrische Stellmotoren verdrehbar sein, die am Flanschabschnitt des Trägerteiles und an einem Flansch des Führungsteiles jeweils befestigt sind und die über Stirnradtriebe mit an den Stellzylindern ausgebildeten Zahnkränzen zusammenwirken, wobei die Zahneingriffe jeweils innerhalb der radial äußeren Abdichtung liegen.

Dabei kann vorteilhaft der mit dem Trägerteil zusammenwirkende Stellzylinder mit dessen Zahnkranz in eine Ringnut des Flanschabschnittes des Trägerteiles einragen, wobei der Stellmotor dann durch eine entsprechende Ausnehmung im Flanschabschnitt hindurch mit dem Zahnkranz trieblich verbunden ist.

Bei einem über eine Gelenkwelle angetriebenen Rad des Kraftfahrzeuges wird vorgeschlagen, dass der das Rad tragende Radflansch einen Nabenabschnitt aufweist, der sich durch den Nabenabschnitt des Trägerteiles hindurch erstreckt und der im Bereich der radial inneren Abdichtung über eine Steckverzahnung mit der Gelenkglocke der Gelenkwelle trieblich verbunden ist. Dies stellt bei einer robusten Konstruktion und Antriebsmoment-Einleitung in den Radflansch einen ausreichenden Freigang der Gelenkglocke der Gelenkwelle bei entsprechender Spur- und Sturzverstellung des Rades sicher.

Schließlich kann der die Steckverzahnung aufweisende Antriebszapfen der Gelenkglocke mittels einer am Radflansch angreifenden Spannschraube unter Zwischenschaltung einer zwischen dem Nabenabschnitt des Radflansches und dem Nabenabschnitt des Trägerteiles vorgesehenen, an der Gelenkglocke und an dem Lagerinnenring des Radlagers abgestützten Distanzhülse gehalten sein.

Ein Ausführungsbeispiel der Erfindung ist im Folgenden näher erläutert. Die anliegende, schematische Zeichnung zeigt in:
- **Fig. 1**: ein Prinzipbild der Vorrichtung zum Verstellen von Spur- und Sturzwinkel einer Radaufhängung für Kraftfahrzeuge mit einem mehrteiligen Radträger;
- **Fig. 2**: in stark vereinfachter Ansicht eine Ausführung des Radträgers im Längsschnitt; und
- **Fig. 3**: den in der **Fig. 2** gezeigten Radträger in Seitenansicht sowie mit in Schnittdarstellung gezeigtem Faltenbalg.

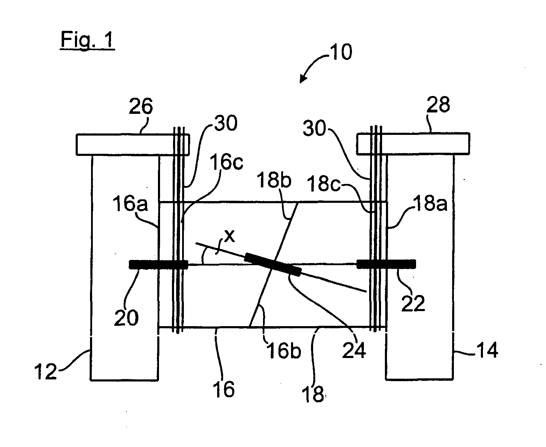

Die **Fig. 1** zeigt zur theoretischen Erläuterung der Erfindung als grobes Prinzipbild ein Radführungselement bzw. einen Radträger 10 einer Radaufhängung für Kraftfahrzeuge, der zur Verstellung des Sturzes und/oder der Spur des Rades 1 im Bereich der Radlagerung wie folgt unterteilt ist:

Der Radträger 10 weist ein Trägerteil 12 auf, in dem das Rad des Kraftfahrzeuges drehbar gelagert ist. Die Betriebsbremse des Fahrzeuges ist starrverbunden mit dem Trägerteil 12. Es sei bemerkt, dass soweit nicht beschrieben die Funktionsteile der Radaufhängung bekannter Bauart sein können.

Ferner weist der Radträger 10 ein Führungsteil 14 auf, das mit der Radaufhängung zusammenwirkt bzw. gegebenenfalls einen Teil der Radaufhängung bildet.

Zwischen dem Trägerteil 12 und dem Führungsteil 14 sind als Stellelemente zwei im Wesentlichen rotationssymmetrische Stellzylinder bzw. Drehteile 16, 18 vorgesehen, die jeweils über Drehachsen 20, 22 verdrehbar mit dem Trägerteil 12 bzw. dem Führungsteil 14 verbunden sind. Die beiden Drehachsen 20, 22 sind in den Figuren koaxial ausgerichtet und verlaufen in der Raddrehachse.

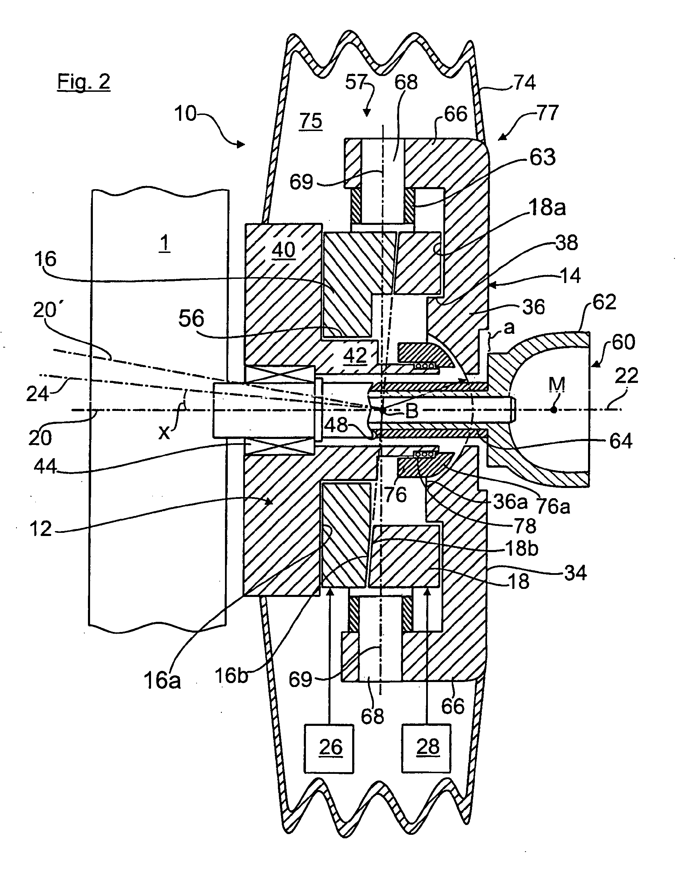

Während die dem Trägerteil 12 und dem Führungsteil 14 unmittelbar benachbarten Anlaufflächen 16a, 18a der Stellzylinder 16, 18 rotationssymmetrisch ausgeführt sind, liegen die Stellzylindern 16, 18 über plane Schrägflächen 16b, 18b aneinander in Gleitkontakt derart an, dass der Stellzylinder 16 um eine in der **Fig. 1** **und** **2** nach oben geneigte Drehachse 24 dreht. Die Drehachse 24 ist daher wie ersichtlich senkrecht zu den Schrägflächen 16b, 18b und in einem definierten Winkel x zu der Drehachse 22 geneigt ausgerichtet.

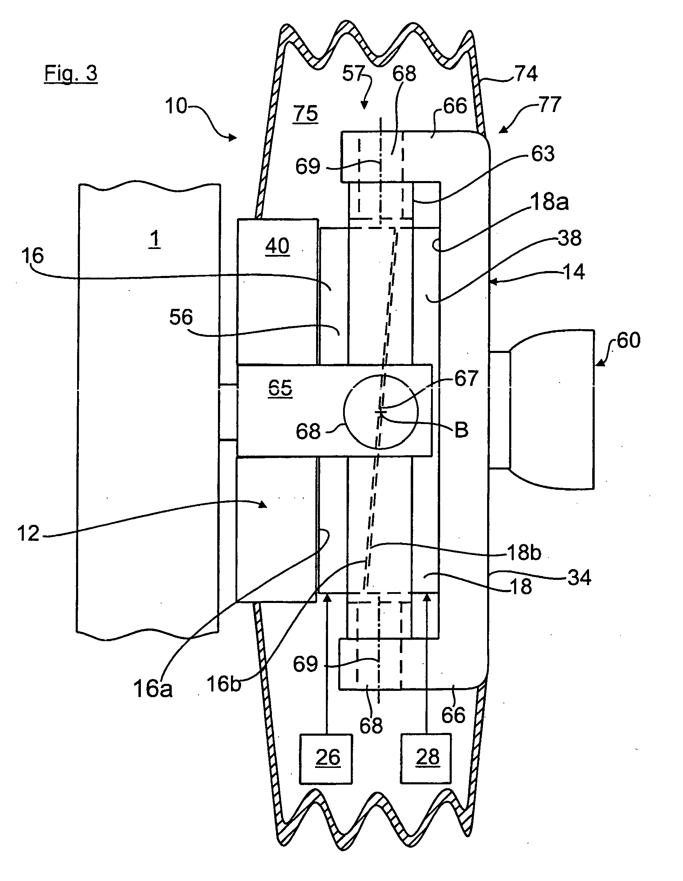

In der **Fig. 1** ist die Mittelachse 20 des Trägerteiles 12 koaxial zur Drehachse 22 des Führungsteiles 14 ausgerichtet. Die Mittelachse 20 des Trägerteils 12 fällt mit der Raddrehachse zusammen, so dass das in den **Fig. 2** **und** **3** gezeigte Fahrzeugrad 1 in einer Neutrallage ohne Sturz- und Spurwinkel eingestellt ist. In der später beschriebenen Ausführungsform der **Fig. 2** ist zusätzlich auch die Mittelachse 20' angedeutet. Die gezeigte Winkellage der Mittelachse 20' ergibt sich beim Verdrehen des Stellzylinders 16 gegenüber den Stellzylinder 18 um einen Drehwinkel von 180°.

Am Trägerteil 12 und am Führungsteil 14 ist gemäß der **Fig. 1** jeweils ein eiektrischer Stellmotor 26, 28 vorgesehen, die mit den Stellzylindern 16, 18 über Zahnriemen 30 trieblich verbunden sind. Mittels der Stellmotoren 26, 28 können die Stellzylinder 16, 18 gleichsinnig oder gegensinnig in beide Drehrichtungen verdreht werden, wodurch das Trägerteil 12 eine Taumelbewegung ausführend den Spurwinkel und/oder den Sturzwinkel des Rades 1 entsprechend verändert.

In der **Fig. 2** **und** **3** ist eine Ausführungsform des in der **Fig. 1** gezeigten mehrteiligen Radträgers 10 gezeigt. Diese Ausführungsform stimmt vom grundsätzlichen Aufbau mit dem Radträger 10 der **Fig. 1** überein. Insofern wird auf dessen Beschreibung Bezug genommen.

Die **Fig. 2** zeigt in einem Längsschnitt entlang der Drehachse 22 des Rades 1 der Radaufhängung den Radträger 10 in einer konstruktiven Ausführung.

Der Radträger 10 setzt sich wie vorstehend beschrieben aus dem mit Radführungselementen wie Lenkern, etc. gelenkig verbundenen Führungsteil 14, dem das Rad tragenden Trägerteil 12 und den rotationssymmetrischen Stellzylindern 16, 18 zusammen.

Das Führungsteil 14 weist einen Tragflansch 34 auf, der einen radial innenliegenden Lagerring 36 trägt. Der Lagerring 36 bildet über eine Gleitfläche 38 mit dem radial außenliegenden Stellzylinder 18 eine erste Gleitlagerung, deren Drehachse mit der Drehachse 22 zusammenfällt.

Gemäß der **Fig. 2** sind die Stellmotoren 26, 28 mit den Stellzylinder 16, 18 in Wirkverbindung, die mit Pfeilen angedeutet ist. Der Stellzylinder 18 kann in einer Ausführung an seinem Außenumfang mit einem nicht gezeigten Zahnkranz versehen sein, der mit einem nicht ersichtlichen Antriebszahnrad des elektrischen Stellmotors 28 trieblich zusammenwirkt. Der Stellmotor 28 kann ebenfalls an dem Tragflansch 34 des Führungsteiles 14 befestigt sein.

Das Führungsteil 12 weist gemäß der **Fig. 2** einen radial ausgerichteten Flanschabschnitt 40 und einen axial verlaufenden Nabenabschnitt 42 auf. Der Nabenabschnitt 42 erstreckt sich radial innerhalb der beiden Stellzylinder 16, 18 bis auf Höhe des Lagerringes 36 des Tragflansches 34.

Innerhalb des Flanschabschnittes 40 ist ein Radlager 44 als Drehlager für einen nicht näher dargestellten Radflansch mit einem axial in den Nabenabschnitt 42 ebenfalls in Richtung der Schulter der Gelenkwellenglocke 62 vorgesehen.

Das Rad 1 ist in üblicher Weise an dem Radflansch mittels Radschrauben befestigt. Zusätzlich ist eine Bremsscheibe einer Scheibenbremse am Radflansch befestigt. Der Bremssattel der Scheibenbremse ist in nicht ersichtlicher Weise an dem Flanschabschnitt 40 des Trägerteiles 12 befestigt. Des Weiteren ist auf dem Nabenabschnitt 42 über eine Gleitfläche 56 der Stellzylinder 16 drehbar gelagert. Beide Stellzylinder 16, 18 sind daher um ihre Drehachsen 24 drehbar zwischen dem Trägerteil 12 und dem Führungsteil 14 gelagert. Die Drehachse 22 des führungsteilseitigen Stellzylinders 18 ist in der gezeigten Neutrallage koaxial zur Raddrehachse 20 ausgerichtet. Die Drehachse 24 des trägerteilseitigen Stellzylinders 16 ist um den Winkel x gegenüber der Drehachse 22 des führungsteilseitigen Stellzylinders 18 nach oben geneigt ist.

Die relevanten Schrägflächen 16b, 18b der Stellzylinder 16, 18 sind um einen Winkel derart unterschiedlich und schräg zur Drehachse 22 des führungsteilseitigen Stellzylinders 18 ausgeführt, dass durch deren Verdrehung der Sturzwinkel und/oder der Spurwinkel des Rades im Bereich von ca. 5° aus der in den **Fig. 2** **und** **3** gezeigten Neutraistellung heraus verstellbar sind.

Der Stellzylinder 16 trägt dabei einen nicht gezeigten Außenzahnkranz, der über ein nicht ersichtliches Antriebszahnrad mit dem elektrischen Stellmotor 26 trieblich verbunden ist. Der Stellmotor 26 ist an dem Flanschabschnitt 40 des Trägerteiles 12 entsprechend befestigt.

Das Fahrzeugrad 1 ist über eine nur teilweise dargestellte Gelenkwelle 60 angetrieben, von der in der **Fig. 2** der Einfachheit halber nur deren Gelenkglocke 62 und der hülsenförmige Antriebszapfen 64 dargestellt sind. Der Antriebszapfen 64 ist dabei über eine Steckverzahnung in den Nabenabschnitt 48 des Radflansches eingesteckt und mittels einer nicht gezeigten Spannschraube mit einer Spannhülse gegen den Radflansch gespannt.

Als Verdrehsicherung zwischen dem Führungsteil 14 und dem Trägerteil 12 ist radial außerhalb der Stellzylinder 16, 18 ein Kardangelenk 57 vorgesehen, das zwischen dem radseitigen Trägerteil 12 und dem achsseitigen Führungsteil 14 geschaltet ist.

Das Kardangelenk 57 weist gemäß der **Fig. 3** als ein zentrales Gelenkteil einen Kardanring 63 auf, der sich radial außerhalb um die Stellzylinder 16, 18 erstreckt und über einen Radialabstand von den Stellzylindern 16, 18 beabstandet ist. Der Kardanring 63 ist jeweils über eine Kardangelenkgabel 77 mit dem radseitigen Trägerteil 12 und mit dem achsseitigen Führungsteil 14 in Verbindung.

Die beiden Gelenkgabeln 77 weisen jeweils radseitige und achsseitige Stege 65, 66 auf. Die Stege 65, 66 sind einerseits in Festverbindung mit den Träger- und Führungsteilen 12, 14 und andererseits mittels Lagerzapfen 68, die die zueinander rechtwinkligen Drehachsen 67, 69 definieren, am Kardanring 63 angelenkt. Die radseitigen und achsseitigen Stege 65, 66 sind gemäß der **Fig. 3** zueinander um einen Winkel von 90° winkelversetzt. Damit das Kardangelenk 57 den Winkelausschlägen des Radträgers 10 folgen kann, sind die Lagerzapfen 68 so angeordnet, dass deren Drehachsen 67, 69 den Schnittpunkt B zwischen der Drehachse 22 des Stellzylinders 18 und der Drehachse 24 des Stellzylinders 16 kreuzen.

Die Vorrichtung zur Verstellung des Radsturzes und/oder der Spur wie vorbeschrieben ist radial außerhalb mittels eines gummielastischen Faltenbalges 74 (vgl. **Fig. 2**) gegen Umwelteinflüsse wie Feuchtigkeit und Schmutz abgedichtet.

Alternativ kann der Faltenbalg 74 als dünnwandiger Metallbalg ausgeführt sein, der ausreichend torsionssteif als Verdrehsicherung dient und zusätzlich soweit biegeelastisch ist, dass er unter Abdichtung der radial innenliegenden Funktionsteile die genannten Verstellwinkel dauerhaft aufnimmt. Das oben beschriebene Kardangelenk 57 kann dann entfallen.

Die radial innere Abdichtung der Stellzylinder 16, 18 und deren Gleitflächen bzw. Anlageflächen 16b, 18b, 38, 56 ist zwischen dem Lagerring 36 an der Tragplatte 34 des Führungsteiles 14 und dem Nabenabschnitt 42 des Trägerteiles 12 im Bereich der Gelenkglocke 62 der Gelenkwelle 60 vorgesehen. Dabei ist zu berücksichtigen, dass bei einer Spur- und Sturzverstellung des Rades das Trägerteil 12 eine Taumelbewegung mit einem Gelenkpol etwa bei M ausführt, so dass an dem Ringspalt a zwischen der Gelenkglocke 62 und dem Lagerring 36 ein ausreichender Freigang vorzusehen ist.

Zur Sicherstellung einer zuverlässigen Abdichtung ist auf dem Nabenabschnitt 42 ein hülsenförmiger Dichtring 76 axial verschiebbar gelagert, der an seiner Stirnseite einen Kugelabschnitt 76a aufweist, der mit einer kalottenförmigen Ausnehmung 36a im Lagerring 36 zusammenwirkt. Eine an einem Ringbund des Nabenabschnittes 42 und des Dichtringes 76 abgestützte Schraubendruckfeder 78 spannt den Kugelabschnitt 76a des Dichtringes 76 gegen die Ausnehmung 36a vor.

Die Krümmungsradien der Gleitflächen 76a, 36a sind zumindest im Wesentlichen so ausgeführt, dass deren Mittelpunkt mit dem Bewegungspol B in der Drehachse 22 zusammenfällt. Die Gleitflächen 76a, 36a sind mit einem Oberflächenfinish versehen oder mit einem eine geringe Reibung aufweisenden Material (zum Beispiel PTFE) beschichtet.

## Patentansprüche

1. Vorrichtung zum Verstellen von Sturz und/oder Spur eines angetriebenen Rades (1) einer Radaufhängung, insbesondere für Kraftfahrzeuge, mit einem Radträger (10), an dem das Rad (1) drehbar gelagert ist, wobei der Radträger (10) unterteilt ist in ein das Rad (1) aufnehmendes Trägerteil (12), ein mit der Radaufhängung verbundenes Führungsteil (14) und in zwei dazwischen angeordnete und zueinander, sowie zum Trägerteil (12) und zum Führungsteil (14) um Drehachsen (22, 24) verdrehbare Drehteile (16, 18), die mit einander zugewandten, um einen definierten Winkel zur Drehachse geneigten Steuerflächen (16b, 18b) zusammenwirken, und einer Radantriebswelle (60), die durch die Träger- und Führungsteile (12, 14) sowie durch die Drehteile (16, 18) geführt ist, **dadurch gekennzeichnet, dass** das Trägerteil (12) einen sich zum Führungsteil (14) erstreckenden, die Radantriebswelle (60) umgebenden Nabenabschnitt (42) aufweist, um den herum die beiden Drehteile (16, 18) angeordnet sind, und dass zwischen dem Nabenabschnitt (42) und dem Führungsteil (14) ein inneres Dichtelement (76) geschaltet ist, das einen Ringspalt zwischen dem Nabenabschnitt (42) und dem Führungsteil (14) abdichtet.

2. Vorrichtung nach Anspruch 1, **dadurch gekennzeichnet, dass** radial außerhalb der Drehteile (16, 18) zwischen dem Trägerteil (12) und dem Führungsteil (14) ein äußeres Dichtelement (74) vorgesehen ist, so dass zwischen dem inneren und dem äußeren Dichtelement (74, 76) ein nach außen abgedichteter Ringraum (75) für die Drehteile (16, 18) gebildet ist.

3. Vorrichtung nach Anspruch 1 oder 2, **dadurch gekennzeichnet, dass** das radial äußere Dichtelement (74) durch einen mit dem Trägerteil (12) und mit dem Führungsteil (14) fest verbundenen Faltenbalg (74) gebildet ist.

4. Vorrichtung nach Anspruch 3, **dadurch gekennzeichnet, dass** der Faltenbalg (74) als Metallbalg ausgebildet ist und zugleich als Verdrehsicherung für das Trägerteil (12) zum Führungsteil (14) dient.

5. Vorrichtung nach einem der Ansprüche 1 bis 3, **dadurch gekennzeichnet, dass** im Ringraum (75) ein in Umfangsrichtung mit dem Trägerteil (12) und dem Führungsteil (14) gekoppeltes Kardangelenk (57) angeordnet ist.

6. Vorrichtung nach einem der vorhergehenden Ansprüche, **dadurch gekennzeichnet, dass** an dem Führungsteil (14) ein Lagerring (36) ausgebildet ist, auf dem das eine Drehteil (18) drehbar gelagert ist und/oder dass das radial innere Dichtelement (76) zwischen dem Lagerring (36) und dem Nabenabschnitt (42) des Trägerteiles (12) angeordnet ist.

7. Vorrichtung nach einem der vorhergehenden Ansprüche, **dadurch gekennzeichnet, dass** das Dichtelement (76) mittels eines einen Kugelabschnitt (76a) aufweisenden Dichtringes gebildet ist, der auf dem Nabenabschnitt (42) angeordnet ist und mit einer kalottenförmigen Ausnehmung (36a) im Führungsteil (14), insbesondere im Lagerring (36), dichtend zusammenwirkt.

8. Vorrichtung nach Anspruch 7, **dadurch gekennzeichnet, dass** der Dichtring (76) auf dem Nabenabschnitt (42) axial verschiebbar geführt ist und mittels einer Feder (78) gegen die kalottenförmige Ausnehmung (36a) im Lagerring (36) vorgespannt ist.

9. Vorrichtung nach Anspruch 7 oder 8, **dadurch gekennzeichnet, dass** der Mittelpunkt des Kugelabschnittes (76a) des Dichtringes (76) mit dem Schnittpunkt (B) der Drehachse (24) des trägerteilseitigen Stellzylinders (16) und der Drehachse (22) des führungsteilseitigen Stellzylinders (18) bei einer Verstellung des Sturzes und des Spurwinkels über die Drehteile (16, 18) zumindest im Wesentlichen zusammenfällt.

10. Vorrichtung nach einem der vorhergehenden Ansprüche, **dadurch gekennzeichnet, dass** die Drehteile (16, 18) über Stellmotoren (26, 28) verdrehbar sind, die insbesondere am Trägerteil (12) und am Führungsteil (14) befestigt sind, und die bevorzugt über Stirnradtriebe mit an den Stellzylindern (16, 18) ausgebildeten Zahnkränzen (16c, 18c) zusammenwirken, wobei die Zahneingriffe jeweils innerhalb der radial äußeren Abdichtung (74) liegen, welche Stellmotoren (26, 28) insbesondere im Ringraum (75) angeordnet sind.

## Claims

1. Device for adjusting the camber and/or toe of a driven wheel (1) of a wheel suspension, in particular for motor vehicles, comprising a wheel carrier (10) on which the wheel (1) is rotatably mounted, the wheel carrier (10) being divided into a carrier part (12) which holds the wheel (1), a guide part (14) which is connected to the wheel suspension and into two rotating parts (16, 18) which are arranged in between, can be rotated relative to one another and to the carrier part (12) and to the guide part (14) about axes of rotation (22, 24), and interact with control surfaces (16b, 18b) which face one another and which are inclined at a defined angle to the axis of rotation, and a wheel drive shaft (60) which is guided by the carrier part and guide part (12, 14) and by the rotating parts (16, 18), **characterised in that** the carrier part (12) has a hub portion (42) which surrounds the wheel drive shaft (60) and which extends to the guide part (14) and around which the two rotating parts (16, 18) are arranged, and **in that** between the hub portion (42) and the guide part (14) an inner sealing element (76) is inserted which seals an annular gap between the hub portion (42) and the guide part (14).

2. Device according to claim 1, **characterised in that** radially outside the rotating parts (16, 18) between the carrier part (12) and the guide part (14) an outer sealing element (74) is provided such that between the inner and outer sealing elements (74, 76) an outwardly sealed annulus (75) for the rotating parts (16, 18) is formed.

3. Device according to either claim 1 or claim 2, **characterised in that** the radially outer sealing element (74) is formed by a bellows (74) which is rigidly connected to the carrier part (12) and to the guide part (14).

4. Device according to claim 3, **characterised in that** the bellows (74) is formed as a metal bellows and simultaneously functions as an anti-rotation device for the carrier part (12) relative to the guide part (14).

5. Device according to any of claims 1 to 3, **characterised in that** a cardan joint (57) is arranged in the annulus (75) and is coupled to the carrier part (12) and the guide part (14) in the peripheral direction.

6. Device according to any of the preceding claims, **characterised in that** on the guide part (14) a bearing ring (36) is formed, on which one rotating part (18) is rotatably mounted and/or **in that** the radially inner sealing element (76) is arranged between the bearing ring (36) and the hub portion (42) of the carrier part (12).

7. Device according to any of the preceding claims, **characterised in that** the sealing element (76) is formed by means of a gasket which has a spherical portion (76a) and which is arranged on the hub portion (42) and interacts in a sealing manner with a dome-shaped recess (36a) in the guide part (14), in particular in the bearing ring (36).

8. Device according to claim 7, **characterised in that** the gasket (76) is guided in an axially displaceable manner on the hub portion (42) and is pretensioned by means of a spring (78) against the dome-shaped recess (36a) in the bearing ring (36).

9. Device according to either claim 7 or claim 8, **characterised in that** the midpoint of the spherical portion (76a) of the gasket (76) at least substantially coincides with the intersection point (B) of the axis of rotation (24) of the carrier-part-side actuating cylinder (16) and the axis of rotation (22) of the guide-part-side actuating cylinder (18) when the camber and the toe angle are adjusted via the rotating parts (16, 18).

10. Device according to any of the preceding claims, **characterised in that** the rotating parts (16, 18) can be rotated via servomotors (26, 28) which are attached in particular to the carrier part (12) and to the guide part (14), and which preferably interact via spur gearing with ring gears (16c, 18c) formed on the actuating cylinders (16, 18), the tooth engagements each being arranged within the radially outer seal (74), which servomotors (26, 28) are arranged in particular in the annulus (75).

## Revendications

1. Dispositif pour régler le carrossage et/ou le pincement d'une roue entraînée (1) d'une suspension de roue, en particulier pour véhicules automobiles, comprenant un support de roue (10), sur lequel la roue (1) est montée à rotation, dans lequel le support de roue (10) est divisé en une partie de support (12) recevant la roue (1), une partie de guidage (14) liée à la suspension de roue et deux parties rotatives (16, 18) agencées entre elles et pouvant tourner l'une par rapport à l'autre ainsi que par rapport à la partie de support (12) et à la partie de guidage (14) autour d'axes de rotation (22, 24), lesdites parties tournantes coopérant avec des surfaces de commande (16b, 18b) tournées l'une vers l'autre et inclinées d'un angle défini par rapport à l'axe de rotation, et un arbre d'entraînement de roue (60) qui est guidé par les parties de support et de guidage (12, 14) ainsi que par les parties rotatives (16, 18), **caractérisé en ce que** la partie de support (12) présente une section de moyeu (42) s'étendant jusqu'à la partie de guidage (14) et entourant l'arbre d'entraînement de roue (60), autour de laquelle section les deux parties rotatives (16, 18) sont agencées, et **en ce qu'**entre la section de moyeu (42) et la partie de guidage (14) est imbriqué un élément d'étanchéité interne (76) qui étanche une fente annulaire entre la section de moyeu (42) et la partie de guidage (14).

2. Dispositif selon la revendication 1, **caractérisé en ce qu'**il est prévu radialement à l'extérieur des parties rotatives (16, 18) entre la partie de support (12) et la partie de guidage (14) un élément d'étanchéité externe (74) tel que soit formé entre les éléments d'étanchéité interne et externe (74, 76) un espace annulaire (75) étanché vers l'extérieur pour les parties rotatives (16, 18).

3. Dispositif selon la revendication 1 ou la revendication 2, **caractérisé en ce que** l'élément radialement externe (74) est formé par un soufflet (74) relié fixe à la partie de support (12) et à la partie de guidage (14).

4. Dispositif selon la revendication 3, **caractérisé en ce que** le soufflet (74) est formé d'un soufflet métallique et sert également de sécurité anti-rotation pour la partie de support (12) par rapport à la partie de guidage (14).

5. Dispositif selon l'une quelconque des revendications 1 à 3, **caractérisé en ce qu'**est aménagé dans l'espace annulaire (75) un joint de Cardan couplé (57) dans la direction périphérique à la partie de support (12) et à la partie de guidage (14).

6. Dispositif selon l'une quelconque des revendications précédente, **caractérisé en ce qu'**est formé sur la partie de guidage (14) un anneau de palier (36) sur lequel la première partie rotative (18) est montée à rotation et/ou en ce que l'élément d'étanchéité radialement externe (76) est aménagé entre l'anneau de palier (36) et la section de moyeu (42) de la partie de support (12).

7. Dispositif selon l'une quelconque des revendications précédente, **caractérisé en ce que** l'élément d'étanchéité (76) est formé au moyen d'un anneau d'étanchéité présentant une section sphérique (76a), qui est agencé sur la section de moyeu (42) et coopère avec un évidement (36a) en forme de calotte dans la partie de guidage (14), en particulier dans l'anneau de palier (36).

8. Dispositif selon la revendication 7, **caractérisé en ce que** l'anneau d'étanchéité (76) est guidé en coulissement axial sur la section de moyeu (42) et est soumis à une tension préalable contre l'évidement (36a) en forme de calotte dans l'anneau de palier (36) au moyen d'un ressort (78).

9. Dispositif selon la revendication 7 ou la revendication 8, **caractérisé en ce que** le point central de la section sphérique (76a) de l'anneau d'étanchéité (76) coïncide au moins sensiblement avec le point d'intersection (B) de l'axe de rotation (24) du cylindre de réglage (16) côté partie de support et de l'axe de rotation (22) du cylindre de réglage (18) côté partie de guidage lors d'un réglage de la carrosserie et de l'angle de pincement via les parties rotatives (16, 18).

10. Dispositif selon l'une quelconque des revendications précédente, **caractérisé en ce que** les parties rotatives (16, 18) peuvent être entraînées en rotation via des moteurs de réglage (26, 28), qui sont fixés en particulier sur la partie de support (12) et sur la partie de guidage (14) et coopèrent de préférence via des engrenages droits avec des couronnes dentées (16c, 18c) formées sur les cylindres de réglage (16, 18), les engrènements des dents se trouvant respectivement à l'intérieur du joint d'étanchéité radialement externe (74), tandis que les moteurs de réglage (26, 28) sont aménagés en particulier dans l'espace annulaire (75).
